# EUROPÄISCHE PATENTANMELDUNG

(11) **EP 1 108 578 A2**
(43) Veröffentlichungstag der Anmeldung: **20.06.2001**
(21) Anmeldenummer: 00122105.0
(22) Anmeldetag: 12.10.2000
(51) Int. Cl.: B60J 3/02

(54) **Sonnenblende für Fahrzeuge**

(30) Priorität: 14.12.1999 DE 19960355
(71) Anmelder: Johnson Controls Interiors GmbH & Co. KG, 42285 Wuppertal (DE)
(72) Erfinder: Welter, Patrick, 57730 La Chambre (FR)

(57) **Zusammenfassung**

Beschrieben wird eine Sonnenblende für Fahrzeuge, deren Sonnenblendenkörper (1), mit einem Tickethalter (6) bestückt ist. Dabei ist vorgesehen, den Sonnenblendenkörper (1) mit Öffnungen (11) zur Befestigungsanordnung des Tickethalters (6) auszubilden. Der Tickethalter (6) besteht aus einem durch die Öffnungen (11) geführten Band (17).

## Beschreibung

Die Erfindung bezieht sich auf eine Sonnenblende für Fahrzeuge, mit einem aus zwei gegeneinandergesetzten Schalen gebildeten Sonnenblendenkörper, der mit zwei an ihren Rändern umlaufend miteinander verbundenen Dekormaterialzuschnitten umhüllt ist und einen auf einer Breitseite des Sonnenblendenkörpers aufliegend angeordneten Tickethalter trägt.

Sonnenblenden mit Sonnenblendenkörpern, die aus mit ihren Öffnungsrändern gegeneinandergesetzten Schalen bestehen, sind seit Jahren gebräuchlich. Ebenso seit Jahren ist es gebräuchlich solche Sonnenblendenkörper mit Dekormaterialzuschnitten zu umhüllen und mit band- oder taschenförmigen Tickethaltern zu bestücken. Herkömmlicherweise werden die Tickethalter durch Hochfrequenz-Schweißung (deutsches Gebrauchsmuster Nr. 1 899 694) am Dekormaterial festgelegt. Kundenwünsche tendieren aber dahin, Sonnenblenden mit einem Dekormaterial zu erhalten, das nicht hochfrequenzschweißfähig ist, wie es z.B. bei Leder oder Textilmaterial der Fall ist. Auch kommen heute vermehrt Sonnenblenden zum Einsatz, deren Sonnenblendenkörper aus mit Textil kaschierter Pappe geprägt oder auch aus Himmelverkleidungsmaterial gebildet sind. Solche Materialien sind ebenfalls nicht hochfrequenzschweißfähig und machen daher die Befestigungsanordnung von Tickethaltern problematisch.

Der Erfindung liegt hiernach die Aufgabe zugrunde, die Befestigungsanordnung eines Tickethalters an einem Sonnenblendenkörper unabhängig vom Dekor- oder Sonnenblendenkörpermaterial zu vereinfachen und eine optisch ansprechende sowie dem Gebrauchszweck genügende Lösung aufzuzeigen.

Bei einer Sonnenblende gemäß dem Oberbegriff des Anspruchs 1 wird diese Aufgabe dadurch gelöst, daß eine Schale des Sonnenblendenkörpers zwei auch einen der Dekormaterialzuschnitte durchsetzende, zur Befestigungsanordnung des Tickethalters dienende Öffnungen aufweist. Dabei besteht der Tickethalter zweckmäßigerweise aus einem Band, dessen Endbereiche durch die Öffnungen geführt und an der Schalenrückseite befestigt sind.

Gemäß einer Weiterbildung der Erfindung ist vorgesehen, daß die Endbereiche des als Band ausgeführten Tickethalters aneinander befestigt sind.

Von besonderem Vorteil ist eine Weiterbildung der Erfindung, gemäß der vorgesehen ist, daß in jede Öffnung ein Klipskörper, der als Kunststoff-Spritzgußteil ausgebildet sein kann, eingesetzt ist, wobei die Klipskörper jeweils mit einem angeformten Flansch auf dem Dekormaterialzuschnitt aufliegen und mit zumindest einem angeformten Rastvorsprung an der Schalenrückseite hinterrastet sind und daß die Klipskörper jeweils eine Durchgangsöffnung zum Durchführen der Bandenden des Tickethalters aufweisen. Durch diese Maßnahmen wird das optische Erscheinungsbild der Sonnenblende aufgewertet und insbesondere ein Ausfransen der Öffnungsränder im Dekormaterial verhindert.

Das den Tickethalter bildende Band kann aus Gummi, Leder, Textil-, Stretchmaterial oder aus einem mit den Dekormaterialzuschnitten übereinstimmenden Material bestehen.

Bei einer Sonnenblende für Fahrzeuge mit einem Sonnenblendenkörper und einem daran angeordneten Tickethalter ist zur Aufgabenlösung erfindungsgemäß vorgesehen, daß der Sonnenblendenkörper zwei einander beabstandete Durchgangslöcher in seinen Breitseiten aufweist, daß durch die Durchgangslöcher ein Band aus Leder, Textil, Kunststoff od. dgl. geführt ist und daß die Enden des Bandes unlösbar miteinander verbunden sind um auf jeder Breitseite des Sonnenblendenkörpers einen Tickethalter zu bilden. Diese Maßnahme bietet sich insbesondere für Sonnenblenden mit aus einem Stück bestehenden Sonnenblendenkörpern an, also bei Sonnenblendenkörpern, die aus einem massiven Kunststoffschaumkörper oder aus einem hohlen Kunststoffblasformkörper bestehen.

Die Erfindung wird nachfolgend anhand der Zeichnungen an Ausführungsbeispielen näher erläutert, und es zeigen:
- Fig. 1: ein erstes Ausführungsbeispiel einer Sonnenblende,
- Fig. 2: die Sonnenblende nach Fig. 1 in einer Montagephase,
- Fig. 3: einen Schnitt A-A nach Fig. 1 und
- Fig. 4: den Schnitt durch eine Sonnenblende gemäß einem zweiten Ausführungsbeispiel.

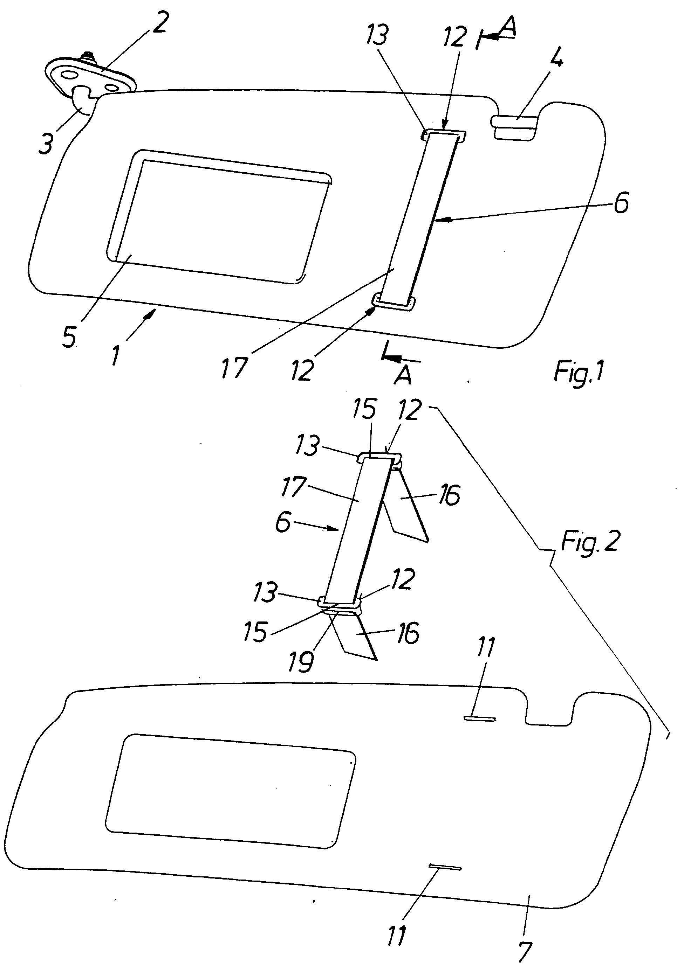

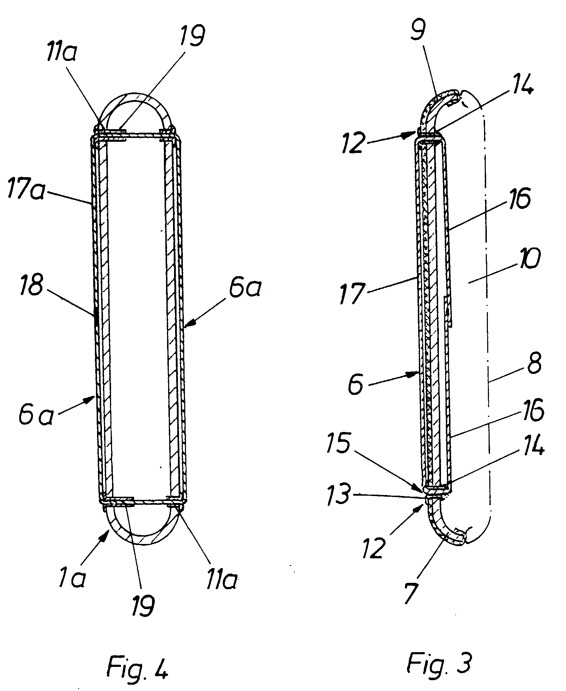

Die Sonnenblende gemäß Fig. 1 bis 3 besteht aus einem Sonnenblendenkörper 1, der mit einer, einen Lagerbock 2 tragenden Lagerachse 3, einem Gegenlagerstift 4, einer Spiegelbaueinheit 5 und einem Tickethalter 6 bestückt ist. Der Sonnenblendenkörper 1 weist einen relativ flachen Aufbau, eine etwa rechteckige Form und, wie aus Fig. 3 ersichtlich eine Schalenbauweise auf.

Die Schalen 7 und 8, von denen die letztere lediglich strichpunktiert angedeutet ist, sind jeweils mit einem Dekormaterialzuschnitt 9 verkleidet und mit ihren Öffnungsrändern gegeneinandergesetzt, so daß sie einen Hohlraum 10 umschließen. Die zum Zusammenhalt der Schalen 7, 8 vorgesehenen Mittel sind herkömmlicher Art und daher nicht dargestellt.

Die Schale 7 weist in der Nähe ihres oberen Längsrands eine erste und in der Nähe ihres unteren Längsrands eine zweite Öffnung auf. Die Öffnungen, die jeweils das Bezugszeichen 11 tragen, durchsetzen die Schalenhälfte 7 (und/oder 8) nebst Dekormaterialzuschnitt 9 und dienen zur Befestigungsaufnahme von Kunststoff-Klipskörpern 12, die jeweils mit einem Flansch 13, zumindest einem Rastvorsprung 14 und einer Durchgangsöffnung 15 ausgebildet sind. Die Durchgangsöffnungen sind zum Durchführen der Endbereiche 16 des aus einem Band 17 gebildeten Tickethalters 6 bestimmt. Zweckmäßigerweise wird zunächst das Band 17 mit den Kunststoff-Klipskörpern 12, wie in Fig. 2 gezeigt bestückt und diese Einheit sodann der Schale 7 zugefügt, wobei die Bandenden durch die Öffnungen 11 geführt und an der Rückseite der Schale 7 nach Verrastung der Kunststoff-Klipskörper 12 festgelegt werden. Die Festlegung der Endbereiche 16 des Bands 17 kann unmittelbar an der Rückseite der Schale 7 z.B. durch Kleben oder auch, wie in Fig. 3 gezeigt, durch unlösbares Miteinanderverbinden der Endbereiche 16 erfolgen.

Der aus einem Band 17 gebildete Tickethalter 6 kann aus nahezu beliebigen Material bestehen, insbesondere aber auch Zierelemente, wie Ziernähte, Mustereinprägungen od. dgl. aufweisen.

Fig. 4 zeigt den Vertikalschnitt durch einen Sonnenblendenkörper 1a, der einstückig ist und aus einem Kunststoffblasformkörper besteht. Eine durchaus mögliche Umhüllung des Sonnenblendenkörpers 1a mit Dekormaterial ist im Ausführungsbeispiel nach Fig. 4 nicht vorgesehen. Der Sonnenblendenkörper 1a weist zwei einander beabstandete Durchgangslöcher 11a in seinen Breitseiten auf. Durch die Durchgangslöcher 11a ist ein Band 17a geführt und die Bandenden sind beispielsweise bei 18 unlösbar miteinander verbunden. Das zu einer Schlaufe verbundene Band bildet auf beiden Breitseiten des Sonnenblendenkörpers la einen Tickethalter 6a.

Es empfiehlt sich, die Durchgangslöcher 11a mit zweiteiligen, druckknopfartig zusammenfügbaren Klipselementen 19 zu bestücken, die jeweils einen sich auf dem Sonnenblendenkörper la abstützenden Flansch und eine Durchgangsöffnung zur Banddurchführung aufweisen.

Die in Fig. 4 gezeigte Tickethalteranordnung kann auch bei einem aus Massivmaterial, wie Schaumkunststoff od. dgl. gebildeten Sonnenblendenkörper vorgesehen werden, indem darin Durchgangslöcher vorzusehen sind, die das Durchführen eines Tickethalter bildenden Bands ermöglichen.

## Patentansprüche

1. Sonnenblende für Fahrzeuge mit einem aus zwei gegeneinandergesetzten Schalen (7, 8) gebildeten Sonnenblendenkörper (1), der mit zwei an ihren Rändern umlaufend miteinander verbundenen Dekormaterialzuschnitten (9) umhüllt ist und einen auf einer Breitseite des Sonnenblendenkörpers (1) aufliegend angeordneten Tickethalter (6) trägt, dadurch gekennzeichnet, daß eine Schale (7) des Sonnenblendenkörpers (1) zwei auch einen der Dekormaterialzuschnitte (9) durchsetzende, zur Befestigungsanordnung des Tickethalters (6) dienende Öffnungen (11) aufweist.

2. Sonnenblende nach Anspruch 1, dadurch gekennzeichnet, daß der Tickethalter (6) aus einem Band (17) besteht, dessen Endbereiche (16) durch die Öffnungen (11) geführt und an der Schalenrückseite befestigt sind.

3. Sonnenblende nach Anspruch 1 oder 2, dadurch gekennzeichnet, daß die Endbereiche (16) des als Band (17) ausgeführten Tickethalters (6) aneinander befestigt sind.

4. Sonnenblende nach wenigstens einem der Ansprüche 1 bis 3, dadurch gekennzeichnet, daß in die Öffnungen (11) Klipskörper (12) eingesetzt sind, die jeweils mit einem angeformten Flansch (13) auf dem Dekormaterialzuschnitt (9) aufliegen und mit zumindest einem angeformten Rastvorsprung (14) an der Schalenrückseite hinterrastet sind und daß die Klipskörper (12) jeweils eine Durchgangsöffnung (15) zum Durchführen der Bandenden (16) des Tickethalters (6) aufweisen.

5. Sonnenblende nach wenigstens einem der Ansprüche 1 bis 4, dadurch gekennzeichnet, daß das Band (17) aus Gummi, Leder, Textil, Stretchmaterial oder aus einem mit den Dekormaterialzuschnitten (9) übereinstimmenden Material besteht.

6. Sonnenblende für Fahrzeuge mit einem Sonnenblendenkörper (1a) und einem daran angeordneten Tickethalter (6a), dadurch gekennzeichnet, daß der Sonnenblendenkörper (1a) zwei einander beabstandete Durchgangslöcher (11a) in seinen Breitseiten aufweist, daß durch die Durchgangslöcher (11a) ein Band (17a) aus Leder, Textil, Kunststoff od. dgl. geführt ist und daß die Enden des Bands (17a) unlösbar miteinander verbunden sind um auf jeder Breitseite des Sonnenblendenkörpers (1a) einen Tickethalter (6a) zu bilden.
